# EUROPÄISCHE PATENTSCHRIFT

(11) **EP 2 845 718 B1**
(45) Veröffentlichungstag und Bekanntmachung des Hinweises auf die Patenterteilung: **09.11.2016**
(21) Anmeldenummer: 14181079.6
(22) Anmeldetag: 14.08.2014
(51) Int. Cl.: B29C 49/78, B29C 49/58, B29C 49/12

(54) **Blasformmaschine mit kontrollierter Reckstangen- und Blasdüsenbewegung**
Blow-moulding machine with controlled stretching rod and blowing nozzle movement
Machine de formage par soufflage ayant un mouvement de buse soufflante et de tige d'étirage

(30) Priorität: 14.08.2013 DE 102013108789
(43) Veröffentlichungstag der Anmeldung: 11.03.2015
(73) Patentinhaber: Krones AG, 93073 Neutraubling (DE)
(72) Erfinder: Finger, Dieter, 93073 Neutraubling (DE); Handschuh, Eduard, 93073 Neutraubling (DE); Geltinger, Florian, 93073 Neutraubling (DE); Haller, Markus, 93073 Neutraubling (DE)
(74) Vertreter: Bittner, Bernhard

(56) Entgegenhaltungen:
- EP-A2- 2 383 102
- DE-A1-102008 005 311
- DE-A1-102009 006 508
- DE-A1-102010 062 424
- US-A1- 2010 252 945

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit längerem bekannt. Dabei werden üblicherweise Kunststoffvorformlinge zunächst in einem Ofen erwärmt und anschließend mittels einer Umformungseinrichtung und insbesondere einer Blasformmaschine zu den Behältnissen umgeformt. Hierzu werden die Kunststoffvorformlinge üblicherweise mit einem gasförmigen Medium, insbesondere mit Blasluft, beaufschlagt und weiterhin auch mittels einer Reckstange gereckt.

Solche Vorrichtungen und Verfahren werden in DE102009006508, DE102010062424, US2010252945, EP2383102 und DE102008005311 offenbart.

Das Expandieren der Kunststoffvorformlinge erfolgt dabei üblicherweise mittels einer Blasdüse, die an den Kunststoffvorformling herangeführt wird. Dabei ist es bekannt, dass diese Blasdüse auf einem Blaskolben befestigt ist und eine Führungshülse diese Blasdüse bzw. diesen Blaskolben auf die Kunststoffvorformlinge zustellen kann. Daneben wird auch eine Reckstange in die Behältnisse eingeführt, um diese zu dehnen. Während die Reckstange wieder zurück bzw. nach oben fährt, wird im Stand der Technik auch die Blasdüse angehoben und das Behältnis kann aus seiner Blasform entnommen werden.

Wenn der Kunststoffvorformling in der Blasform angeordnet ist, führt die Reckstange üblicherweise einen Reckhub nach unten aus und auch die Blasdüse wird zum Abdichten am Halsring des Behältnisses, an dessen Gewinde oder an der Blasform selbst nach unten gedrückt. Es sind im Stand der Technik jedoch auch Maschinen bekannt, bei denen die Kunststoffvorformlinge mit ihrer Mündung nach unten ausgerichtet sind, in diesen Fällen führt die Reckstange entsprechend einen Reckhub nach oben aus. Weiterhin erfolgen jedoch bei der Reckstangenbewegung ein Abbremsen und ein Beschleunigen, um ein sanftes Anfahren zu ermöglichen. So bremst beispielsweise beim Einführen bzw. Herunterfahren die Reckstangenbewegung auf der Blasdüse ab, bevor die Blasdüse auf dem Gewinde aufschlägt, damit so ein sanftes Absetzen der Blasdüse ermöglicht wird. Anschließend beschleunigt die Reckstangenbewegung wieder.

Durch dieses Abbremsen und wieder Beschleunigen geht jedoch wertvolle Prozesszeit verloren. Daneben benötigt der Antrieb auch zum Abbremsen und wieder Beschleunigen sehr viel Energie.

Solche Dämpfungseinrichtungen werden in EP1293329, US4592720 und CA987463 offenbart.

Der vorliegenden Erfindung liegt daher die Aufgabe zugrunde, einerseits die Prozesszeit zum Herstellen der Kunststoffbehältnisse zu verkürzen und andererseits auch eine Energieeinsparung zu ermöglichen.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist einen bewegbaren Träger auf, an den mindestens eine Umformungsstation zum Umformen der Kunststoffvorformlinge zu den Kunststoffbehältnissen angeordnet ist. Dabei weist diese Umformungsstation eine Blasformeinrichtung auf, welche einen Hohlraum ausbildet, innerhalb dessen die Kunststoffvorformlinge zu den Kunststoffbehältnissen umformbar sind. Weiterhin weist die Umformungsstation eine Beaufschlagungseinrichtung auf, welche die Kunststoffvorformlinge zu deren Expansion mit einem fließfähigen Medium beaufschlagt. Dabei weist die Umformungsstation weiterhin einen stangenartigen Körper auf, der in die Kunststoffvorformlinge einführbar ist, um diese in ihrer Längsrichtung zu dehnen. Weiterhin weist die Umformungsstation eine Antriebseinrichtung auf, welche den stangenartigen Körper gegenüber dem Kunststoffvorformling bewegt, insbesondere, um diesen in seiner Längsrichtung zu dehnen.

Erfindungsgemäß ist eine Kopplungseinrichtung vorgesehen, welche eine Bewegung des stangenartigen Körpers gegenüber dem Kunststoffvorformling mit einer Bewegung der Beaufschlagungseinrichtung gegenüber dem Kunststoffvorformling - insbesondere mechanisch - koppelt. Vorteilhaft liegt dabei eine Kopplung nur zeitweise vor, beispielsweise während einer Rückstellbewegung der Beaufschlagungseinrichtung bzw. des stangenartigen Körpers.

Neben der hier beschriebenen mechanischen Kopplung wäre auch eine elektronische Kopplung der jeweiligen Antriebe denkbar, eine mechanische Kopplung lässt sich jedoch relativ einfach realisieren. Daneben kann auch eine Antriebseinrichtung vorgesehen sein, welche die Beaufschlagungseinrichtung gegenüber den Kunststoffvorformlingen bewegt. Es kann dabei jedoch auch die gleiche Antriebseinrichtung zum Bewegen der Beaufschlagungseinrichtung und der Reckstange vorgesehen sein, es können aber auch verschiedene Antriebseinrichtungen vorgesehen sein.

Bei einer weiteren vorteilhaften Ausführungsform handelt es sich bei dem bewegbaren Träger um einen drehbaren Träger und insbesondere um ein Blasrad. An diesem drehbaren Träger sind vorteilhaft mehrere der oben beschriebenen Umformungsstationen angeordnet. Dabei weisen bevorzugt diese Umformungsstationen auch Seitenteile auf, welche bezüglich einander um eine vorgegebene Achse schwenkbar sind, um so die Blasform zu öffnen und zu schließen. Vorteilhaft ist eine Achse, um welche die Träger schwenkbar sind, parallel zu einer Drehachse des Trägers, an dem die Umformungsstationen angeordnet sind.

Weiterhin weist vorteilhaft die Umformungsstation auch ein Bodenteil auf, welches an die Kunststoffbehältnisse bzw. die Kunststoffvorformlinge herangeführt werden kann, um so die Blasform auch nach unten zu schließen.

Bei einer weiteren vorteilhaften Ausführungsform weist die Kopplung einen an der Reckstange angeordneten Anschlag auf, der bei einer Rückstellbewegung des stangenartigen Körpers die Beaufschlagungseinrichtung mitnimmt.

Vorteilhaft handelt es sich dabei um eine Beaufschlagungseinrichtung, welche auf eine Mündung des Behältnisses und/oder einen Tragring des Behältnisses zustellbar ist, um so einerseits eine Abdichtwirkung zu erreichen und um andererseits den Kunststoffvorformling mit Druckluft beaufschlagen zu können. Vorteilhaft weist die Beaufschlagungseinrichtung eine Dichtungseinrichtung auf, welche beim Zustellen auf den Kunststoffvorformling gegenüber diesem eine Abdichtwirkung erreicht. Bei einer weiteren vorteilhaften Ausführungsform ist die Beaufschlagungseinrichtung derart ausgeführt, dass sie zumindest zeitweise eine Mündung des Behältnisses in dessen Umfangsrichtung vollständig umgibt. Bei einer weiteren vorteilhaften Ausführungsform ist der stangenartige Körper innerhalb der Beaufschlagungseinrichtung angeordnet und dieser gegenüber auch beweglich. Dabei sind vorteilhaft Dichtungseinrichtungen vorgesehen, welche eine Bewegung des stangenartigen Körpers gegenüber einer Innenwandung eines Trägers, wie beispielsweise eines Blaskolbens, an der die Beaufschlagungseinrichtung angeordnet ist, abdichten. Bei einer weiteren vorteilhaften Ausführungsform ist der stangenartige Körper mehrteilig ausgebildet.

Vorteilhaft weist die Vorrichtung eine Beeinflussungseinrichtung auf, welche eine Zustellbewegung der Beaufschlagungseinrichtung auf den Kunststoffvorformling zu wenigstens abschnittsweise und/oder wenigstens zeitweise beeinflusst. Hierunter wird insbesondere verstanden, dass diese Zustellbewegung beeinflusst wird, beispielsweise abgebremst, gedrosselt und/oder gedämpft wird. Vorteilhaft wird diese Zustellbewegung derart beeinflusst, dass eine schonende Behandlung bzw. Beaufschlagung des Kunststoffvorformlings möglich ist. Vorteilhaft wird die Zustellbewegung wenigstens abschnittsweise in einer diese Bewegung verlangsamenden Weise beeinflusst.

So kann die die Vorrichtung beispielsweise eine Dämpfungseinrichtung aufweisen, welche eine Zustellbewegung der Beaufschlagungseinrichtung auf den Kunststoffvorformling zu wenigstens abschnittsweise dämpft. Vorteilhaft wirkt die oben beschriebene Kopplung nicht während einer Zustellbewegung der Blasdüse und der Reckstange auf bzw. in den Kunststoffvorformling, sondern während einer Rückstellbewegung und dabei vorteilhaft auch nicht während der gesamten Rückstellbewegung, sondern lediglich während eines vorgegebenen Abschnitts der Rückstellbewegung und insbesondere eines zeitlichen Endabschnitts der Rückstellbewegung.

Zudem ist es auch möglich, dass die Kopplung auch während einer Zustellbewegung der Blasdüse wirkt, allerdings vorteilhaft nur bis zu dem Zeitpunkt, zu dem die Blasdüseneinrichtung an den Kunststoffvorformling angesetzt ist.

Die oben beschriebene Beeinflussungseinrichtung (beispielsweise eine Dämpfungseinrichtung) kann derart gestaltet sein, dass sie lediglich eine Zustellbewegung der Beaufschlagungseinrichtung zu dem Kunststoffvorformling hin beeinflusst (beispielsweise dämpft), nicht jedoch eine Rückstellbewegung. Dies wird unten unter Bezugnahme auf die Figuren genauer erläutert. In diesem Zusammenhang wird darauf hingewiesen, dass im Folgenden stellvertretend für eine Beeinflussungseinrichtung auch von einer Dämpfungseinrichtung gesprochen wird.

Bei einer weiteren vorteilhaften Ausführungsform ist wenigstens eine der beiden erwähnten Antriebseinrichtungen eine elektrische Antriebseinrichtung. Bei dieser elektrischen Antriebseinrichtung handelt es sich insbesondere, aber nicht ausschließlich, um einen Elektromotor, insbesondere einen Linearmotor. Vorteilhaft ist auch wenigstens eine Antriebseinrichtung eine pneumatische Antriebseinrichtung. Denkbar wären jedoch hier auch beispielsweise hydraulische Antriebe, magnetische Antriebe und auch Führungskurvenantriebe.

Bei einer weiteren vorteilhaften Ausführungsform handelt es sich um zwei verschiedene Gattungen an Antrieben, beispielsweise um einen elektrischen und einen pneumatischen Antrieb, um einen elektrischen und einen hydraulischen Antrieb, einen elektrischen und einen Führungskurvenantrieb, einen pneumatischen und einen hydraulischen Antrieb, einen pneumatischen und einen Führungskurvenantrieb oder einen hydraulischen und einen Führungskurvenantrieb.

Bei einer weiteren vorteilhaften Ausführungsform ist die erste Antriebseinrichtung eine pneumatische Antriebseinrichtung und die zweite Antriebseinrichtung eine elektrische Antriebseinrichtung. So kann insbesondere diejenige Antriebseinrichtung, welche die Beaufschlagungseinrichtung bewegt, pneumatisch ausgeführt sein und die Antriebseinrichtung, welche die Reckstange bewegt, elektrisch. Diese Kombination erlaubt hinsichtlich der Rückstellbewegung eine Einsparung an Energie, da vorteilhaft die pneumatische Antriebseinrichtung wenigstens abschnittsweise während der Rückstellbewegung nicht aktiviert zu werden braucht.

Bei einer weiteren vorteilhaften Ausführungsform ist die Beeinflussungseinrichtung bzw. Dämpfungseinrichtung eine pneumatisch wirkende Beeinflussungseinrichtung bzw. Dämpfungseinrichtung. Mit anderen Worten kann es sich um eine auf Gasströmen basierende Dämpfungseinrichtung handeln. Dabei weist vorteilhaft diese Dämpfungseinrichtung bzw. Beeinflussungseinrichtung wenigstens eine Gasleiteinrichtung auf, durch welche ein Gas geführt wird. Insbesondere kann hier Luft durch die besagte Gasleiteinrichtung geführt werden. Durch dieses Führen des Gases kann, wie unten genauer beschrieben wird, eine Beeinflussung, insbesondere eine Dämpfungswirkung erreicht werden.

Bei einer weiteren vorteilhaften Ausführungsform weist dabei die Beeinflussungseinrichtung eine von einem Gas durchströmbare Drosseleinrichtung auf, welche eine Zustellbewegung der Beaufschlagungseinrichtung auf den Kunststoffvorformling wenigstens zeitweise drosselt. Vorteilhaft drosselt bzw. dämpft oder bremst diese Drosseleinrichtung (insbesondere ausschließlich) eine Zustellbewegung der Beaufschlagungseinrichtung auf den Kunststoffvorformling zu. Daneben kann jedoch eine Einrichtung vorgesehen sein, welche bewirkt, dass bei einem Rückstellen bzw. Rückführen der Beaufschlagungseinrichtung diese Beeinflussung (beispielsweise Dämpfung und/oder Drosselung) durch die Drosselungseinrichtung nicht bewirkt wird. Dies kann beispielsweise durch ein Rückschlagventil erreicht werden, welches bewirkt, dass die Drosseleinrichtung beim Rückführen der Beaufschlagungseinrichtung umgangen wird und damit die Drosselungswirkung nicht eintrifft.

Die vorliegende Erfindung ist weiterhin auf ein Verfahren zum Umformen von Kunststoffvorformlingen zu Kunststoffbehältnissen gerichtet. Dabei wird ein Kunststoffvorformling mittels einer Umformungsstation, welche an einen beweglichen Träger angeordnet ist, entlang einer vorgegebenen Transportbahn transportiert und während dieses Transports mit einem fließfähigen und insbesondere einem gasförmigen Medium beaufschlagt, um so zu dem Kunststoffbehältnis expandiert zu werden. Weiterhin wird eine Beaufschlagungseinrichtung durch eine Bewegung in einer Längsrichtung des Kunststoffvorformlings auf diesen Kunststoffvorformling zugestellt und weiterhin wird ein stangenartiger Körper in den Kunststoffvorformling eingeführt, um diesen in seiner Längsrichtung zu dehnen.

Der stangenartige Körper wird mittels einer Antriebseinrichtung in den Kunststoffvorformling eingeführt, wobei zunächst die Beaufschlagungseinrichtung an den Kunststoffvorformling angelegt wird und anschließend eine (weitere) Zustellbewegung des stangenartigen Körpers in den Kunststoffvorformling wenigstens zeitweise beschleunigt wird. Dabei ist es möglich, dass der stangenartige Körper bereits mit der Beaufschlagungseinrichtung an das Behältnis herangeführt wird und anschließend, nachdem diese aufgesetzt hat, in das Innere des Kunststoffbehältnisses beschleunigt wird. Auch auf diese Weise kann eine Einsparung von Prozesszeit erreicht werden.

Im Gegensatz zum Stand der Technik wird daher eine Zustellbewegung des stangenartigen Körpers nicht zunächst abgebremst und anschließend wieder beschleunigt, sondern nur beschleunigt bzw. ab dem Aufsetzen der Beaufschlagungseinrichtung beschleunigt. Mit anderen Worten wird vom Beginn der Zustellbewegung des stangenartigen Körpers bis der stangenartige Körper eine Innenwandung des Kunststoffvorformlings kontaktiert, seine Bewegung nicht gebremst, sondern vorteilhaft zumindest abschnittsweise beschleunigt.

Dabei ist es möglich, dass die Beaufschlagungseinrichtung mit einer insbesondere parametrierbaren Geschwindigkeit auf den Kunststoffvorformling abgesetzt bzw. abgelegt wird. Nach diesem Absetzen der Beaufschlagungseinrichtung auf der Form bzw. den Kunststoffvorformling beschleunigt der Antrieb des stangenartigen Körpers. Dabei beschleunigt dieser Antrieb vorteilhaft automatisch auf eine vorgegebene bzw. eingestellte Reckgeschwindigkeit. Vorteilhaft besteht nur zeitweise bzw. teilweise eine Kopplung zwischen der Bewegung der Beaufschlagungseinrichtung und der Bewegung des stangenartigen Körpers. Vorteilhaft besteht zeitweise diese Kopplung nicht.

So ist es bevorzugt möglich, dass während der Abwärtsbewegung der Beaufschlagungseinrichtung die Kopplung zwischen der Blasdüse und dem stangenartigen Körper bereits vor dem Absetzen der Beaufschlagungseinrichtung auf den Kunststoffvorformling getrennt wird.

Es wäre jedoch auch möglich, dass diese Kopplung kurz vorher bzw. vor dem Aufsetzen der Beaufschlagungseinrichtung auf den Kunststoffvorformling aufgehoben wird oder auch während der Abwärtsbewegung. Vorteilhaft wird eine Rückstellbewegung der Beaufschlagungseinrichtung wenigstens zeitweise an einer Rückstellbewegung des stangenartigen Körpers gekoppelt.

Vorteilhaft bewegen sich die Umformungsstationen bzw. die Kunststoffvorformlinge während ihrer Expansion entlang eines kreisförmigen Pfades. Bei einem weiteren vorteilhaften Verfahren werden die Kunststoffvorformlinge vor der Beaufschlagung mit dem gasförmigen Medium erwärmt. Bei einem weiteren vorteilhaften Verfahren wird die Vorrichtung bzw. werden die Bewegungen so gesteuert, dass ein zu frühes Absenken, beispielsweise durch eine Fehleingabe eines Maschinenbenutzers, steuerungsseitig verhindert wird. Vorteilhaft ist eine entsprechende Vorrichtung derart konzipiert, dass der Benutzer lediglich den Reckvorgang definiert und eine Prozessoreinrichtung das Absenken und Hochfahren der Beaufschlagungseinrichtung automatisiert, insbesondere automatisiert durch die Maschinensteuerung, bewirkt.

Vorteilhaft wird auch während einer Rückstellbewegung des stangenartigen Körpers die Geschwindigkeit teilweise reduziert, um den Ankopplungspunkt mit der Beaufschlagungseinrichtung sanft abzufahren. Dabei ist jedoch auszuführen, dass die Rückstellbewegung des stangenartigen Körpers bzw. der Beaufschlagungseinrichtung weniger kritisch für die Prozesszeit ist, da zu diesem Zeitpunkt das Behältnis bereits weitgehend bzw. vollständig ausgeformt ist. Vorteilhaft wird während einer Abwärtsbewegung der Beaufschlagungseinrichtung bzw. Blasdüse die Kopplung zwischen der Blasdüse und dem stangenartigen Körper noch vor der Abstützung der Beaufschlagungseinrichtung an einer Mündung oder einem Tragring des Kunststoffvorformlings getrennt.

Vorteilhaft findet eine Verzögerung und insbesondere eine mechanische Verzögerung einer Absetzgeschwindigkeit der Beaufschlagungseinrichtung statt. Damit wird vorteilhaft die Zustellbewegung der Beaufschlagungseinrichtung auf den Kunststoffvorformling wenigstens zeitweise gedrosselt. Vorteilhaft erfolgt die Drosselung auf Basis einer Luftdrossel.

Bei einem weiteren vorteilhaften Verfahren wird während der Zustellung der Beaufschlagungseinrichtung auf den Kunststoffvorformling eine Kopplung zwischen der Bewegung der Beaufschlagungseinrichtung und der Bewegung des stangenartigen Körpers wenigstens zeitweise aufgehoben. Bei einem weiteren vorteilhaften Verfahren wird der Kunststoffvorformling zu seiner Expansion mit mehreren Druckstufen beaufschlagt. Vorteilhaft weist die Vorrichtung einen Ventilblock mit einer Vielzahl von Ventilen auf. Vorteilhaft ist die Beaufschlagungseinrichtung in der Längsrichtung der Behältnisse gegenüber diesem Ventilblock beweglich. Vorteilhaft ist auch der stangenartige Körper gegenüber dieser Beaufschlagungseinrichtung in einer Längsrichtung des Kunststoffvorformlings beweglich.

Weitere Vorteile und Ausführungsformen ergeben sich aus den beigefügten Zeichnungen. Darin zeigen:
- Fig. 1: Eine schematische Darstellung einer Vorrichtung zum Umformen von Kunststoffvorformlingen zu Kunststoffbehältnissen;
- Fig. 2: eine grafische Darstellung zur Veranschaulichung einer Reckstangenbewegung nach dem Stand der Technik;
- Fig. 3: eine Detaildarstellung einer Umformungsstation bei nicht aufgesetztem Zustand einer Beaufschlagungseinrichtung auf den Kunststoffvorformling; und
- Fig. 4: die Darstellung aus Fig. 3, wobei hier die Beaufschlagungseinrichtung auf den Kunststoffvorformling aufgesetzt ist.

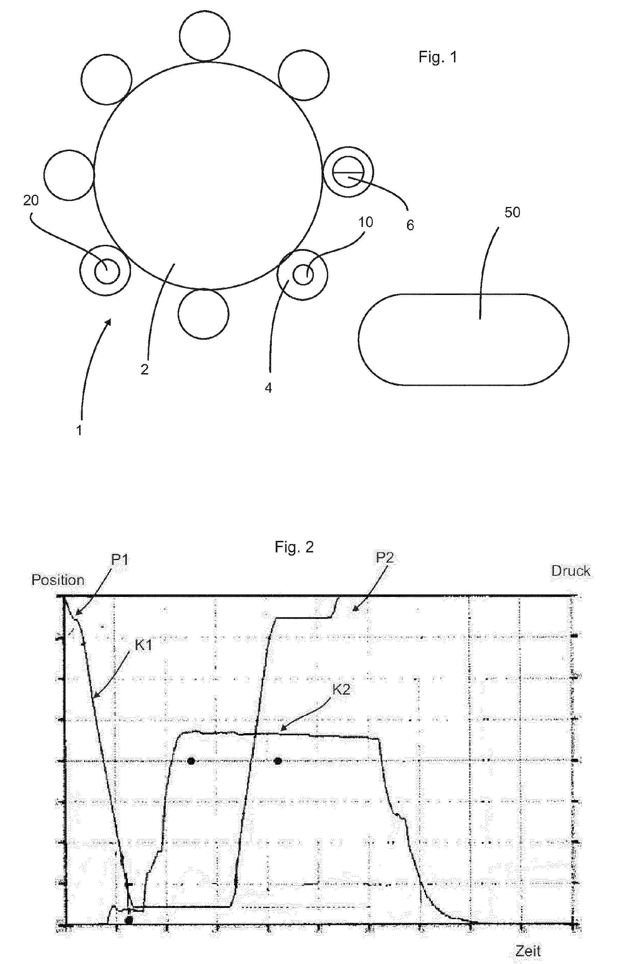

Fig. 1 zeigt eine grob schematische Darstellung einer erfindungsgemäßen Vorrichtung 1 zum Umformen von Kunststoffvorformlingen 10 zu Kunststoffbehältnissen 20. Dieser Vorrichtung werden über eine Erwärmungseinrichtung 50, bei der es sich beispielsweise um einen Mikrowellen- oder Infrarotofen handeln kann, erwärmte Kunststoffvorformlinge 10 zugeführt. Das Bezugszeichen 6 bezieht sich auf eine Blasformeinrichtung, innerhalb derer die Kunststoffvorformlinge durch Beaufschlagung mit Luft zu den Kunststoffbehältnissen expandiert werden. Das Bezugszeichen 4 bezieht sich auf eine einzelne Umformungsstation. Man erkennt, dass die Vorrichtung 1 einen Träger 2 aufweist, an dessen Außenumfang eine Vielzahl von Umformungsstationen 4 angeordnet ist. Das Bezugszeichen 20 kennzeichnet ein fertig hergestelltes Behältnis.

Fig. 2 zeigt eine Kurve K1, welche eine Reckstangenbewegung verdeutlicht. Auf der linken Koordinate ist dabei eine Position der Reckstange aufgetragen und auf der rechten Koordinate ein Druck. Auf der Ordinate ist die Zeit aufgetragen.

Man erkennt, dass die Reckstange zunächst nach unten gefahren wird und in ihrer unteren Stellung eine Weile verbleibt, bis sie wieder zurückgezogen wird. Der Punkt P1 kennzeichnet einen Bereich, in dem die Reckstangenbewegung kurz verzögert und anschließend wieder beschleunigt wird, wie oben beschrieben. Der Punkt P2 kennzeichnet einen weiteren Bereich, in dem die Reckstangenbewegung kurz angehalten wird, um danach mit der Beaufschlagungseinrichtung vollständig zurückgezogen zu werden. Insbesondere der Bereich P1 verursacht Verluste an Prozesszeit und bedingt zum anderen höhere nötige Energien.

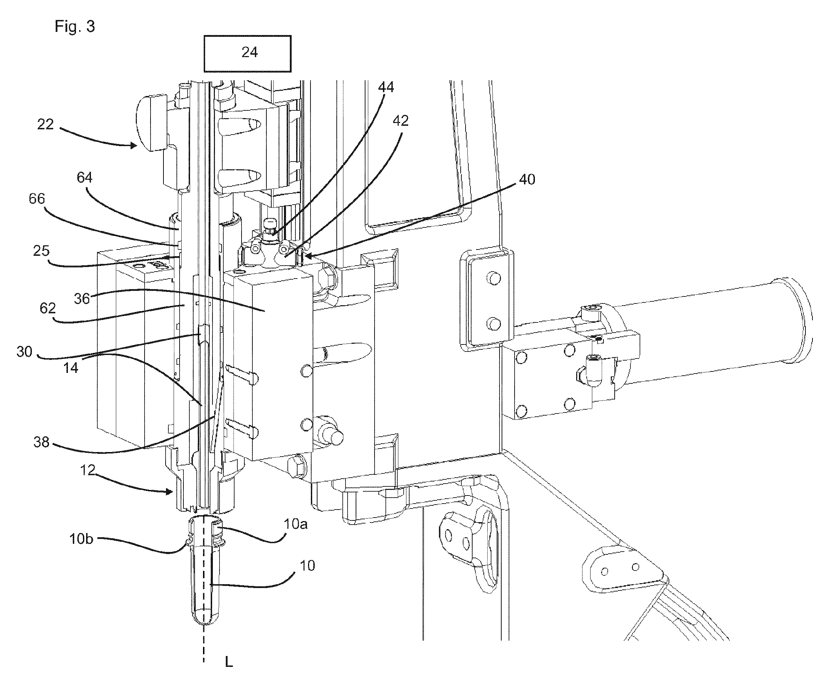

Fig. 3 zeigt Teile einer erfindungsgemäßen Umformungsstation detailweise. Dabei ist hier nicht die Blasform dargestellt. Das Bezugszeichen 12 bezieht sich auf eine Beaufschlagungseinrichtung wie etwa eine Blasdüse, die zum Expandieren des Kunststoffvorformlings 10 auf einen Mündungsrand 10a oder hier auf einen Tragring 10b aufgesetzt werden kann. Nach dem Aufsetzen der Beaufschlagungseinrichtung kann der Kunststoffvorformling mit Blasluft versorgt werden, um so expandiert zu werden. Zu diesem Zweck weist die Umformungsstation auch einen Ventilblock 36 auf, in dem eine Vielzahl von Ventilen angeordnet ist, welche die Zuführung von Druckluft in den Kunststoffvorformling 10 steuern.

Das Bezugszeichen 14 kennzeichnet eine Reckstange, die ebenfalls in das Innere des Kunststoffvorformlings 10 eingeschoben wird, um diesen in seiner Längsrichtung L zu dehnen.

Das Bezugszeichen 24 kennzeichnet grob schematisch eine Antriebseinrichtung, um die Reckstange 14 zu bewegen. Dabei kann es sich hier um einen Elektromotor und insbesondere um einen Linearmotor handeln. Grundsätzlich wären jedoch diverse Antriebsmöglichkeiten, wie z.B. hydraulische oder pneumatische Antriebe, für den Reckstangenantrieb denkbar.

Das Bezugszeichen 22 kennzeichnet eine Antriebseinrichtung, um die Beaufschlagungseinrichtung ebenfalls in der Längsrichtung zu bewegen. Hier ist eine Führungsrolle dargestellt, die mit einer (nicht gezeigten) Führungskurve zusammenwirkt. Vorteilhaft ist jedoch hier ein pneumatischer Antrieb vorgesehen.

An dem stangenartigen Körper 14 bzw. der Reckstange ist eine mechanische Kopplungseinrichtung 30 vorgesehen. Diese mechanische Kopplungseinrichtung ist dabei bevorzugt fest an dem stangenartigen Körper 14 angeordnet. Diese mechanische Kopplungseinrichtung ist innerhalb einer Hülse 62 bzw. eines Blaskolbens, an der die Beaufschlagungseinrichtung 12 angeordnet ist, beweglich. Bei einem Rückziehen der Reckstange kann diese mechanische Kopplungseinrichtung an diese Hülse anschlagen, um diese so wieder nach oben zu ziehen.

In diesem Falle kann auf eine Rückstellung der Beaufschlagungseinrichtung 12 durch die Antriebseinrichtung 22 bevorzugt verzichtet werden.

Das Bezugszeichen 64 kennzeichnet eine weitere Führungshülse für die Bewegung der Beaufschlagungseinrichtung. Das Bezugszeichen 66 kennzeichnet eine Dichtungseinrichtung, welche die Bewegung der Beaufschlagungseinrichtung bzw. der Hülse 64 abdichtet.

Das Bezugszeichen 25 bezieht sich auf einen Kanal, insbesondere einen Luftkanal, der hier auch die Funktion einer Beeinflussung, insbesondere Dämpfung und/oder eine Vorspannung der Beaufschlagungseinrichtung übernimmt. Durch eine Aufwärts- und Abwärtsbewegung der Blasdüseneinrichtung 12 bzw. der Hülse/des Blaskolbens 62 wird dieser Luftraum 25 verkleinert bzw. vergrößert. Das Bezugszeichen 40 kennzeichnet das eigentliche Beeinflussungselement bzw. Dämpfungselement. Dabei ist hier eine Drossel 42 vorgesehen, sowie ein Rückschlagventil 44. Bei einer Aufwärtsbewegung der Beaufschlagungseinrichtung 12 kann Luft über dieses Rückschlagventil entweichen. Bei einer Abwärtsbewegung, d.h. bei einer Expansion des Luftraums 25, wird der im Luftraum 25 anstehende Druck durch die Vergrößerung des Luftraums geringer, was dazu führt, dass die Bewegung der Beaufschlagungseinrichtung auf den Kunststoffvorformling zu gedämpft wird. Während des Expandierens des Kunststoffvorformlings steht wieder der zum Vorspannen der Beaufschlagungseinrichtung erforderliche Druck in dem Kanal 25 an. Wenigstens zeitweise kann parallel zur Abwärtsbewegung Luft durch die Drossel 42 in den Luftraum 25 nachströmen. Dadurch wird in dem Luftraum 25 ein ausreichend hohes Druckniveau erreicht, um die Beaufschlagungseinrichtung während der Beaufschlagung des Behältnisses mit Druckluft auf dem Behältnis zu halten.

Es ist weiterhin denkbar, dass zwischen dem mechanischen Kopplungselement 30 und dem Anschlag innerhalb der Hülse 62 ein Beeinflussungsmittel bzw. Dämpfungsmittel, wie etwa ein Federelement oder auch ein elastomeres Beeinflussungselement bzw. Dämpfungselement, angeordnet ist. Auf diese Weise kann das Ansetzen des Kopplungselements an den Anschlag gedämpft werden. Es wäre jedoch auch möglich, dass zwischen dem mechanischen Kopplungselement und dem stangenartigen Körper 14 ein Beeinflussungselement bzw. Dämpfungselement angeordnet ist und/oder ein Federelement, welches das Kopplungselement bezüglich dem stangenartigen Körper in einer vorgegebenen Längsrichtung des stangenartigen Körpers, hier nach oben hin, vorspannt.

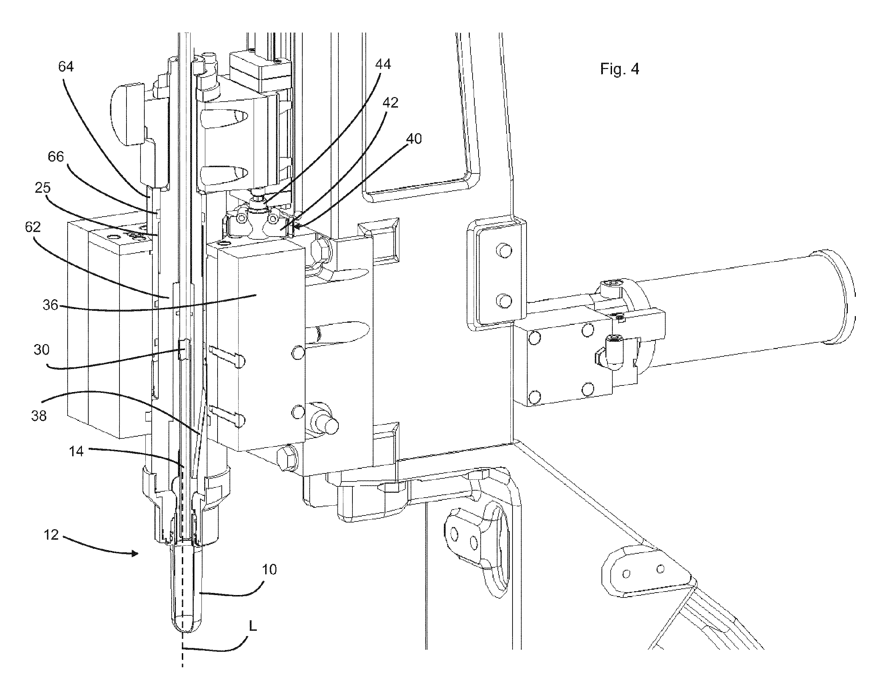

Fig. 4 zeigt die Beaufschlagungseinrichtung aus Fig. 3 in einem auf den Kunststoffvorformling 10 aufgesetzten Zustand. In diesem Fall ist der besagte Luftraum, der hier insbesondere als Ringkanal ausgeführt ist, maximal Man erkennt, dass hier der Ventilblock 36 stationär ausgeführt ist und sich die Beaufschlagungseinrichtung 12 diesem gegenüber in der Längsrichtung L bewegt.

Daneben können auch Dichtungseinrichtungen vorgesehen sein, welche die Bewegung des stangenartigen Körpers 14 bzw. der Reckstange gegenüber der Beaufschlagungseinrichtung bzw. der Hülse 62 abdichten.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: erfindungsgemäße Vorrichtung
- 2: Träger/Behältnis
- 4: Umformungsstationen
- 6: Blasformeinrichtung
- 10: Kunststoffvorformlinge
- 10a: Mündungsraum
- 12: Beaufschlagungseinrichtung
- 14: Reckstange
- 22: Antriebseinrichtung
- 24: Antriebseinrichtung
- 25: Luftkanal
- 30: Kopplungseinrichtung
- 36: Ventilblock
- 40: Beeinflussungseinrichtung / Beeinflussungselement
- 42: Drossel
- 44: Rückschlagventil
- 50: Erwärmungseinrichtung
- 62: Hülse
- 64: weitere Führungshülse
- 66: Dichtungseinrichtung

- K1: Kurve
- P1: Verzögerungsbereich
- P2: zweiter Verzögerungsbereich
- L: Längsrichtung

## Patentansprüche

1. Vorrichtung (1) zum Umformen von Kunststoffvorformlingen (10) zu Kunststoffbehältnissen (20) mit einem bewegbaren Träger (2), an dem mindestens eine Umformungsstation (4) zum Umformen der Kunststoffvorformlinge (10) zu den Kunststoffbehältnissen (20) angeordnet ist, wobei die Umformungsstation eine Blasformeinrichtung (6) aufweist, welche einen Hohlraum ausbildet, innerhalb dessen die Kunststoffvorformlinge (10) zu den Kunststoffbehältnissen (20) umformbar sind und wobei die Umformungsstation weiterhin eine Beaufschlagungseinrichtung (12) aufweist, welche die Kunststoffvorformlinge zu deren Expansion mit einem fließfähigen Medium beaufschlagt, wobei die Umformungsstation weiterhin eine Reckstange (14) aufweist, die in die Kunststoffvorformlinge einführbar ist, um diese in ihrer Längsrichtung (L) zu dehnen, wobei die Umformungsstation eine Antriebseinrichtung (24) aufweist, welche die Reckstange (14) gegenüber dem Kunststoffvorformling bewegt, wobei eine Kopplungseinrichtung (30) vorgesehen ist, welche eine Bewegung der Reckstange (14) gegenüber dem Kunststoffvorformling zeitweise mit einer Bewegung der Beaufschlagungseinrichtung (12) gegenüber dem Kunststoffvorformling (10) insbesondere mechanisch koppelt und die Vorrichtung eine Beeinflussungseinrichtung (40) aufweist, welche eine Zustellbewegung der Beaufschlagungseinrichtung (12) auf den Kunststoffvorformling zu wenigstens abschnittsweise und/oder wenigstens zeitweise beeinflusst,
**dadurch gekennzeichnet, dass** die Beeinflussursgseinrichtung (40) eine pneumatisch wirkende Beeinflussungseinrichtung ist und die Beeinflussungseinrichtung (40) eine von einem Gas durchströmbare Drosseleinrichtung (42) aufweist, welche eine Zustellbewegung der Beaufschlagungseinrichtung (12) auf den Kunststoffvorformling wenigstens zeitweise drosselt.

2. Vorrichtung (1) nach Anspruch 1,
**dadurch gekennzeichnet, dass**
eine weitere Antriebseinrichtung vorgesehen ist, welche die Beaufschlagungseinrichtung (12) gegenüber den Kunststoffvorformlingen (10) bewegt, und wenigstens eine Antriebseinrichtung (22, 24) eine elektrische Antriebseinrichtung ist.

3. Vorrichtung nach Anspruch 1,
**dadurch gekennzeichnet, dass**
eine weitere Antriebseinrichtung vorgesehen ist, welche die Beaufschlagungseinrichtung (12) gegenüber den Kunststoffvorformlingen (10) bewegt, und wenigstens eine Antriebseinrichtung eine pneumatische Antriebseinrichtung (22,24) ist.

4. Vorrichtung nach wenigstens einem der vorangegangenen Ansprüche,
**dadurch gekennzeichnet, dass**
die erste Antriebseinrichtung (22), welche die Beaufschlagungseinrichtung (12) gegenüber den Kunststoffvorformlingen (10) bewegt, eine pneumatische Antriebseinrichtung (22) ist und die zweite Antriebseinrichtung (24), welche die Reckstange (14) gegenüber dem Kunststoffvorformling (10) bewegt, eine elektrische Antriebseinrichtung (24) ist.

5. Verfahren zum Umformen von Kunststoffvorformlingen (10) zu Kunststoffbehältnissen
(2o) mittels der Vorrichtung (1) gemäß Anspruch 1, wobei ein Kunststoffvorformling mittels einer Umformungsstation, welche an einem beweglichen Träger (2) angeordnet ist, entlang einer vorgegebenen Transportbahn transportiert wird und während dieses Transports mit einem fließfähigen und insbesondere einem gasförmigen Medium beaufschlagt wird, um so zu dem Kunststoffbehältnis expandiert zu werden, und wobei eine Beaufschlagungseinrichtung (12) durch eine Bewegung in einer Längsrichtung des Kunststoffvorformlings (10) auf diesen Kunststoffvorformling zugestellt wird und wobei weiterhin eine Reckstange (14) in den Kunststoffvorformling eingeführt wird um diesen in seiner Längsrichtung (L) zu dehnen, wobei
die Reckstange mittels einer Antriebseinrichtung (24) in den Kunststoffvorformling eingeführt wird, wobei zunächst die Beaufschlagungseinrichtung an den Kunststoffvorformling angelegt wird und anschließend eine Zustellbewegung der Reckstange in den Kunststoffvorformling wenigstens zeitweise beschleunigt wird, **dadurch gekennzeichnet, dass** eine Zustellbewegung der Beaufschlagungseinrichtung auf den Kunststoffvorformling zu wenigstens zeitweise mittels einer pneumatisch wirkenden Beeinflussungseinrichtung, welche eine von Gas durchströmbare Drosseleinrichtung (42) aufweist, gedrosselt wird, wobei die Drosselung auf Basis einer Luftdrossel erfolgt.

6. Verfahren nach Anspruch 5,
**dadurch gekennzeichnet, dass**
während einer Zustellung der Beaufschlagungseinrichtung auf den Kunststoffvorformling (10) eine Kopplung zwischen der Bewegung der Beaufschlagungseinrichtung und der Bewegung der Reckstange (14) wenigstens zeitweise aufgehoben wird.

## Claims

1. An apparatus (1) for shaping plastics material pre-forms (10) into plastics material containers (20) with a movable carrier (2) on which at least one shaping station (4) for shaping the plastics material pre-forms (10) into the plastics material containers (20) is arranged, wherein the shaping station has a blow moulding device (6) which forms a cavity inside which the plastics material pre-forms (10) are capable of being shaped into the plastics material containers (20), and wherein the shaping station additionally has an actuation device (12) which acts upon the plastics material pre-forms with a flowable medium for their expansion, wherein the shaping station additionally has a stretching rod (14) which is capable of being inserted into the plastics material pre-forms in order to stretch them in the longitudinal direction (L) thereof, wherein the shaping station has a drive device (24) which moves the stretching rod (14) with respect to the plastics material pre-form, wherein a coupling device (30) is provided which couples a movement of the stretching rod (14) with respect to the plastics material pre-form to a movement of the actuation device (12) with respect to the plastics material pre-form (10) - in particular in a mechanical manner - at least for a time, and the apparatus has an influencing device (40) which influences a supply movement of the actuation device (12) towards the plastics material pre-form at least in sections and/or at least for a time, **characterized in that** the influencing device (40) is an influencing device which operates pneumatically and **in that** the influencing device (40) has a throttle device which is capable of having gas flow through it and which throttles a supply movement of the actuation device (12) to the plastics material preform at least for a time.

2. An apparatus (1) according to claim 1, **characterized in that** a further drive device is provided which moves the actuation device (12) with respect to the plastics material preforms (10) and **in that** at least one drive device (22, 24) is an electric drive device.

3. An apparatus (1) according to claim 1, **characterized in that** a further drive device is provided which moves the actuation device (12) with respect to the plastics material preforms (10) and **in that** at least one drive device is a pneumatic drive device (22, 24).

4. An apparatus (1) according to at least one of the preceding claims, **characterized in that** the first drive device (22) which moves the actuation device (12) with respect to the plastics material preforms (10) is a pneumatic drive device (22) and the second drive device (24) which moves the stretching rod (14) with respect to the plastics material preform (10) is an electric drive device.

5. A method for shaping plastics material pre-forms (10) into plastics material containers (20) according to claim 1, wherein a plastics material pre-form is conveyed along a pre-set conveying path by means of a shaping station which is arranged on a movable carrier (2), and during this conveying it is acted upon with a flowable, and in particular a gaseous medium, in order to be expanded to form the plastics material container in this way, and wherein an actuation device (12) is supplied to the plastics material pre-form (10) by a movement in a longitudinal direction of this plastics material pre-form and wherein a stretching rod (14) is additionally introduced into the plastics material pre-form in order to stretch it in the longitudinal direction (L) thereof, wherein the stretching rod is introduced into the plastics material pre-form by means of a drive device (24), wherein the actuation device is first set against the plastics material pre-form and then a supply movement of the stretching rod into the plastics material pre-form is accelerated at least for a time, **characterized in that** a supply movement of the actuation device towards the plastics material pre-form is throttled at least for a time by means of a pneumatically acting influencing device which has a throttle device (42) which is capable of having gas flow through it is throttled wherein the throttling procedure takes place on the basis of an air throttle.

6. A method according to claim 5, **characterized in that** a coupling between the movement of the actuation device and the movement of the stretching rod (14) is discontinued at least for a time during a supply of the actuation device to the plastics material pre-form (10).

## Revendications

1. Dispositif (1) permettant de transformer des préformes en matière plastique (10) en récipients en matière plastique (20), le dispositif comprenant un support mobile (2), sur lequel est agencée au moins une station de transformation (4) permettant de transformer les préformes en matière plastique (10) en récipients en matière plastique (20), la station de transformation comprenant un dispositif de moulage par soufflage (6), lequel constitue une cavité à l'intérieur de laquelle les préformes en matière plastique (10) peuvent être transformées en récipients en matière plastique (20) et la station de transformation comprenant en outre un dispositif applicateur (12), lequel expose les préformes en matière plastique à un milieu coulant de manière à entraîner leur expansion, la station de transformation comprenant en outre une barre d'étirage (14) qui peut être introduite dans les préformes en matière plastique, afin d'étirer ces dernières dans leur direction longitudinale (L), la station de transformation comprenant un dispositif d'entraînement (24), lequel déplace la barre d'étirage (14) par rapport à la préforme en matière plastique,
un dispositif d'accouplement (30) étant prévu, lequel accouple en particulier mécaniquement et par intermittence un mouvement de la barre d'étirage (14) par rapport à la préforme en matière plastique à un mouvement du dispositif applicateur (12) par rapport à la préforme en matière plastique (10) et le dispositif comprenant un dispositif d'intervention (40), lequel agit au moins en sections et/ou au moins temporairement sur un mouvement d'avance du dispositif applicateur (12) en direction de la préforme en matière plastique,
**caractérisé en ce que** le dispositif d'intervention (40) comprend un dispositif d'intervention à action pneumatique et le dispositif d'intervention (40) comprend un dispositif de restriction (42) qui peut être traversé par un gaz et qui restreint au moins temporairement un mouvement d'avance du dispositif applicateur (12) en direction de la préforme en matière plastique.

2. Dispositif (1) selon la revendication 1,
**caractérisé en ce qu'**
un autre dispositif d'entraînement est prévu, lequel déplace le dispositif applicateur (12) par rapport aux préformes en matière plastique (10), et au moins un dispositif d'entraînement (22, 24) est un dispositif d'entraînement électrique.

3. Dispositif selon la revendication 1,
**caractérisé en ce qu'**
un autre dispositif d'entraînement est prévu, lequel déplace le dispositif applicateur (12) par rapport aux préformes en matière plastique (10), et au moins un dispositif d'entraînement est un dispositif d'entraînement pneumatique (22, 24).

4. Dispositif selon au moins l'une des revendications précédentes, **caractérisé en ce que**
le premier dispositif d'entraînement (22), lequel déplace le dispositif applicateur (12) par rapport aux préformes en matière plastique (10), est un dispositif d'entraînement pneumatique (22) et le deuxième dispositif d'entraînement (24), lequel déplace la barre d'étirage (14) par rapport à la préforme en matière plastique (10), est un dispositif d'entraînement électrique (24).

5. Procédé permettant de transformer des préformes en matière plastique (10) en récipients en matière plastique (20) au moyen du dispositif (1) selon la revendication 1, une préforme en matière plastique étant transportée au moyen d'une station de transformation, laquelle est agencée sur un support mobile (2), le long d'une bande de transport prédéfinie et étant exposée à un milieu coulant et en particulier gazeux pendant ce transport, afin d'être ainsi amenée en expansion pour obtenir un récipient en matière plastique, et un dispositif applicateur (12), à la suite d'un mouvement dans une direction longitudinale de la préforme en matière plastique (10), étant avancé en direction de cette préforme en matière plastique, et une barre d'étirage (14) étant en outre introduite dans la préforme en matière plastique afin de l'étendre dans la direction longitudinale (L) de cette dernière,
la barre d'étirage étant introduite dans la préforme en matière plastique au moyen d'un dispositif d'entraînement (24), le dispositif applicateur étant tout d'abord appliqué contre la préforme en matière plastique puis un mouvement d'avance de la barre d'étirage dans la préforme en matière plastique étant accéléré au moins par intermittence, **caractérisé en ce qu'**un mouvement d'avance du dispositif applicateur en direction de la préforme en matière plastique est restreint au moins temporairement au moyen d'un dispositif d'intervention à action pneumatique, lequel comprend un dispositif de restriction (42) pouvant être traversé par un gaz, la restriction étant mise en oeuvre sur la base d'une restriction d'air.

6. Procédé selon la revendication 5,
**caractérisé en ce qu'**
un accouplement entre le mouvement du dispositif applicateur et le mouvement de la barre d'étirage (14) est libéré au moins temporairement pendant que le dispositif applicateur s'avance en direction de la préforme en matière plastique (10).
